# EUROPEAN PATENT APPLICATION

(11) **EP 4 631 853 A1**
(43) Date of publication of application: **15.10.2025**
(21) Application number: 23899180.6
(22) Date of filing: 03.11.2023
(51) Int. Cl.: B64C 25/52

(54) **SLED LANDING GEAR AND METHOD FOR USING SAME**

(30) Priority: 09.12.2022 CN 202211588506
(71) Applicant: AVIC Harbin Aircraft Industry Group Co., Ltd, Harbin, Heilongjiang 150060 (CN)
(72) Inventor: SONG, Xianlong, Harbin, Heilongjiang 150060 (CN); CHENG, Hao, Harbin, Heilongjiang 150060 (CN); LIU, Shuang, Harbin, Heilongjiang 150060 (CN); CHENG, Didi, Harbin, Heilongjiang 150060 (CN); LI, Zheng, Harbin, Heilongjiang 150060 (CN); DENG, Yunsheng, Harbin, Heilongjiang 150060 (CN); WANG, Yonghe, Harbin, Heilongjiang 150060 (CN)
(74) Representative: Osha BWB
(86) International application number: PCT/CN2023/000106
(87) International publication number: WO 2024/119578

(57) **Abstract**

A sled landing gear and a method for using same. The sled landing gear comprises a main landing gear (100), a front steel cable (200), a rear steel cable (300), a retractable steel cable (400), a main gear sled (500), and a retraction/extension device. The main gear sled (500) is a double-board structure with an opening. An end of the front steel cable (200) is connected to the main landing gear (100). Another end of the front steel cable (200) is connected to a front end of the main gear sled (500). An end of the rear steel cable (300) is connected to the main landing gear (100). Another end of the rear steel cable (300) is connected to a rear end of the main gear sled (500). An end of the retractable steel cable (400) is connected to a middle section of the rear steel cable (300). Another end of the retractable steel cable (400) is connected to the retraction/extension device. The retraction/extension device controls retraction and extension of the sled via the retractable steel cable.

## Description

### TECHNICAL FIELD

The present disclosure relates to the design of aircraft landing gear, in particular to a sled landing gear and a method for using the same.

### BACKGROUND

Aircrafts with conventional wheeled landing gear are inherently incapable of operating on soft snow surfaces. Due to the limited tire contact area, the contact pressure with the ground exerted by the aircraft becomes excessive, causing the landing gear to sink into the snow and potentially leading to an accident. In order to make this kind of aircraft suitable for use in areas where there is a considerable amount of snow perennially and much of the airport pavement is covered by soft snow, it is necessary to improve the landing device of the aircraft and increase the contact area with the ground when the aircraft takes off, lands and taxies to reduce the contact pressure, so that the aircraft does not sink into the snow.

### SUMMARY

An objective of the present disclosure is to provide a sled landing gear and a method of use thereof to enable an aircraft to take off and land on ordinary pavements and on soft snow surfaces.

Embodiments of the present disclosure relate to a sled landing gear including a main landing gear, a front steel cable, a rear steel cable, a retractable steel cable, a main gear sled, and a retraction/extension device. The main gear sled is a double-board structure with an opening. An end of the front steel cable is connected to the main landing gear, and another end of the front steel cable is connected to a front end of the main gear sled. An end of the rear steel cable is connected to the main landing gear, and another end of the rear steel cable is connected to a rear end of the main gear sled. An end of the retractable steel cable is connected to a middle section of the rear steel cable, and another end of the retractable steel cable is connected to the retraction/extension device. The retraction/extension device controls the retraction and extension of the sled via the retractable steel cable.

In one or more embodiments, the retraction/extension device includes a hydraulic actuator, a front torque tube, two rotating baffle linkages, a rotating baffle, a transmission rod assembly, a motion slot, a rear torque tube, a rear torque tube rocker arm, a left axle rocker arm, a right axle rocker arm, a retractable steel cable pulley, a front steel cable joint, and a rear steel cable joint. The hydraulic actuator is hinged on an actuator support fixed to the main gear sled. The two ends of the front torque tube are rotatably connected to left and right longitudinal beams of the main gear sled. A middle section of a left rocker arm of the front torque tube is hinged to an actuating end of the hydraulic actuator. An end portion of the left rocker arm of the front torque tube is hinged to an end of one of the rotating baffle linkages. An end portion of a right rocker arm of the front torque tube is hinged to an end of another one of the rotating baffle linkages. The other ends of the two rotating baffle linkages are hinged to two lateral sides of the rotating baffle, respectively. The two lateral sides of the rotating baffle are hinged to two lateral sides of the main gear sled. The transmission rod assembly includes two rods hinged together. The motion slot is provided in a body of the sled. A hinge point of the transmission rod assembly is confined within the motion slot. Two ends of the transmission rod assembly are hinged to a middle section of the right rocker arm of the front torque tube and an end of the rear torque tube rocker arm, respectively. Another end of the rear torque tube rocker arm is connected to a right end of the rear torque tube. An end of the left axle rocker arm and an end of the right axle rocker arm are hinged to an aircraft wheel axle. Another end of the left axle rocker arm and another end of the right axle rocker arm are hinged to left and right long rocker arms of the rear torque tube. The retractable steel cable pulley is fixed to the main gear sled. An end of the retractable steel cable is connected to a middle section of the rear steel cable. The retractable steel cable is fixed to the rotating baffle, bypassing the retractable steel cable pulley. The front steel cable joint and the rear steel cable joint are respectively fixed at the front end and the rear end of the main gear sled.

In one or more embodiments, reinforcing ribs are provided on side surfaces of the rotating baffle.

In one or more embodiments, the motion slot is a groove along the heading direction. The hinge point of the transmission rod assembly can only move in the heading direction.

In one or more embodiments, the two rods of the transmission rod assembly are hinged by a bolt.

In one or more embodiments, the front steel cable is an elastic steel cable.

Embodiments of the present disclosure also relate to a method of using a sled landing gear, the method being performed by means of the sled landing gear described above. The method includes:
a sled extension actuation including: controlling, by the retraction/extension device, the retractable steel cable to extend such that the rear steel cable is taut, the front steel cable being used to maintain stability of the main gear sled; and
a sled retraction actuation including: controlling, by the retraction/extension device, the retractable steel cable to retract so as to drive the middle section of the rear steel cable, such that the rear end of the main gear sled is raised and stably retracted by the front steel cable.

In one or more embodiments, the sled retraction actuation includes: pushing, by the hydraulic actuator, the left rocker arm of the front torque tube to drive the front torque tube to rotate; pulling, by the left and right rocker arms on the front torque tube, the left and right rotating baffle linkages; pulling, by the rotating baffle linkages, the rotating baffle to rotate upward with a connection point with a body of the sled as an axis, the rotating baffle, while rotating upward, driving the retractable steel cable connected at a rear portion of the rotating baffle to pull up a rear portion of the sled; while the front torque tube is pulling the rotating baffle linkages to rotate upward, pulling, by the right rocker arm of the front torque tube, the transmission rod assembly to move forward so as to pull the rear torque tube rocker arm to rotate; driving, by the rear torque tube rocker arm, the rear torque tube to rotate upward with a hinge shaft connecting the rear torque tube with the left axle rocker arm and the right axle rocker arm as an axis, to retract the sled smoothly.

In one or more embodiments, the sled extension actuation includes: pulling, by the hydraulic actuator, the left rocker arm of the front torque tube to restore the front torque tube to an initial position of a sled extension state; during the restoring of the front torque tube, driving, by the front torque tube, the rotating baffle linkages so as to drive the rotating baffle to rotate downward, the rear steel cable pulled up by the retractable steel cable being gradually put back to its initial position; pushing, by the right side rocker arm of the front torque tube, the transmission rod assembly to return to the sled extended position under the restriction of the motion slot and to push the rear torque tube rocker arm to drive the rear torque tube to rotate, such that the sled moves downward to the sled extended position with the left axle rocker arm and the right axle rocker arm as fulcrum, completing the actuation of the sled from the retracted position to the extended position.

### Beneficial effects:

For an aircraft with wheeled landing gear, installing a retractable sled device on the landing gear will enable the aircraft to take off and land on soft snow and ordinary hard pavement alike, broadening the scope of use of the aircraft. When the sled is extended during landing, the tires still participate in the landing buffer process and do not contact the snow surface, which is convenient for analyzing the landing process of the aircraft.

### BRIEF DESCRIPTION OF DRAWINGS

FIG. 1 is a schematic diagram of a sled landing gear structure.
FIG. 2 is a schematic diagram of the internal structure of a main gear sled.
FIG. 3 shows the main components of a retraction/extension device.
FIG. 4 is a schematic diagram of the retracted sled.

In the Figures: main landing gear ... 100; front steel cable ... 200; rear steel cable ... 300; retractable steel cable ... 400; main gear sled ... 500; hydraulic actuator ... 1; front torque tube ... 2; rotating baffle linkage ... 3; rotating baffle ... 4; transmission rod assembly ... 5; motion slot ... 6; rear torque tube ... 7; rear torque tube rocker arm ... 8; left axle rocker arm ... 9; right axle rocker arm ... 10; retractable steel cable pulley ... 11; front steel cable joint ... 12; rear steel cable joint ... 13.

### DETAILED DESCRIPTION

In order to increase the contact area of the aircraft with the ground and reduce the contact pressure, there are two main schemes to improve the landing device of the aircraft. One scheme is to dismantle the wheels and tires of the aircraft and instead install sled devices on the wheel axles of the aircraft. The front end and the rear end of the sled are connected to an elastic rope and a steel cable, respectively. The other ends of the elastic rope and the steel cable are connected to the fuselage to keep the angle of the sled board of the sled device during flight and landing, ensuring the normal take-off and landing of the aircraft and reducing the resistance of the aircraft during flight. The other scheme is to retain the existing structure of the aircraft landing gear and, by modifying the front and main gear axles of the aircraft, install sled devices on the basis of the existing front and main landing gears. At the same time, elastic ropes and steel cables are used to connect the sled devices and the fuselage to ensure that the pitch angle of the sled board is within a certain range during flight, takeoff, and landing. Moreover, most of such sled devices have a function of retractability. When the aircraft needs to take off and land on an ordinary pavement, the sled can be retracted, so that the aircraft tires contact the pavement, and the take-off and landing of the aircraft are consistent with those of a normal wheeled landing gear aircraft. When the aircraft needs to take off and land on soft snow, the sled is in a lowered state. During take-off and landing, the tires are pressed on the sled, and the sled board is pressed on the snow, so that the aircraft can take off, land and taxi on soft snow. Comparing the two schemes, the first scheme is simple in structure, light-weighted, and easy for maintenance, but has a single functionality. It can only take off and land on snow, and is only suitable for use in areas where it is frozen perennially and the airport runway is also covered with snow. In the second scheme, the aircraft has a relatively large weight gain and needs to add a corresponding retraction/extension control system. For most aircrafts with retractable landing gear, the landing gear will no longer be retractable after installing the sled device, but the retraction and extension of the sled can be controlled according to different pavement requirements during take-off and landing, which improves the adaptability of the aircraft and has a wide working range.

In the sled landing gear according to one or more embodiments of the present disclosure, the sled can be driven by a hydraulic actuator to be retracted and extended, so as to enable the aircraft to take off and land on the ordinary pavement surface and the soft snow surface.

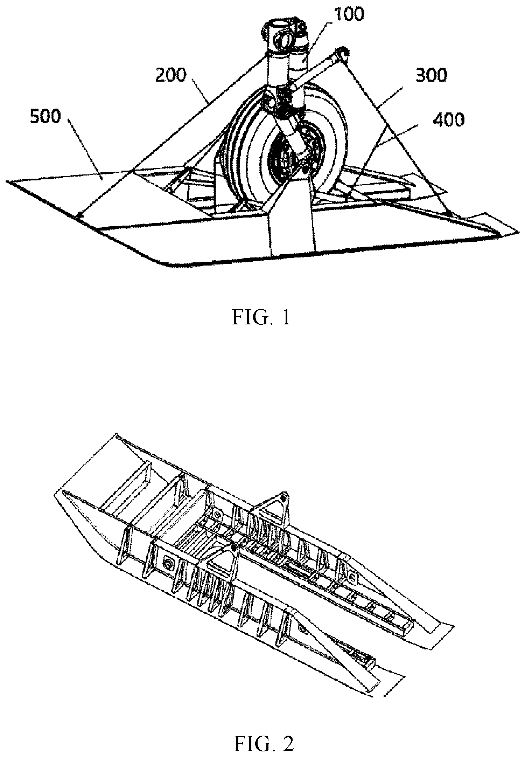

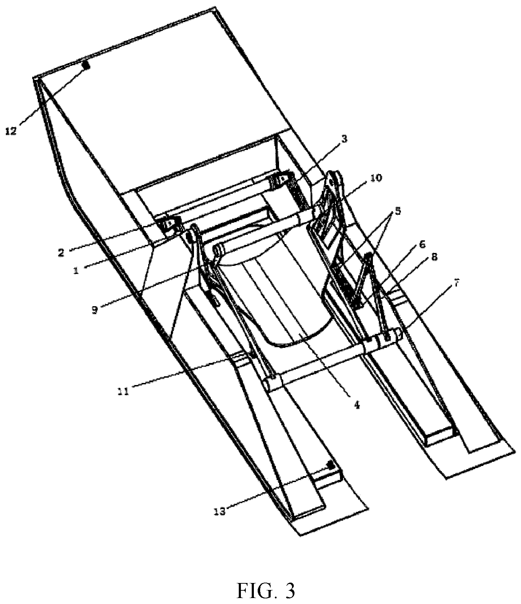

FIG. 1 schematically shows the installation of a main gear sled of a aircraft. The main gear sled system mainly consists of five parts: a main landing gear 100, a front steel cable 200, a rear steel cable 300, a retractable steel cable 400, and a main gear sled 500. The main gear sled 500 is connected to the main landing gear 100 of the aircraft via the front steel cable 200, the rear steel cable 300, and an axle. A retraction/extension device of the main gear sled is shown in FIG. 3. The part that drives the retractable steel cable mainly includes a hydraulic actuator 1, a front torque tube 2, rotating baffle linkages 3, and a rotating baffle 4. The hydraulic actuator 1 pulls the rotating baffle linkages 3 and the rotating baffle 4, drives the retractable steel cable 400 connected to a left rear portion of the rotating baffle 4, and tightens the rear steel cable 300 of the sled to raise a rear portion of the main gear sled 500. The part that keeps balance mainly includes a transmission rod assembly 5, a motion slot 6, a rear torque tube 7, a rear torque tube rocker arm 8, a left axle rocker arm 9, and a right axle rocker arm 10. The front torque tube 2 pulls the transmission rod assembly 5 to move in the motion slot 6 so as to impart a torque to the rear torque tube 7 and apply to the left axle rocker arm 9 and the right axle rocker arm 10. By setting an appropriate transmission ratio, the retracted height of the retractable steel cable 400 of the sled is consistent with the elevated height of the sled upon rotation of the rear torque tube 7. At this time, it is only necessary to ensure that the front steel cable 200 pulls up the main gear sled 500, and ensure that the rear steel cable 300 of the sled and the retractable steel cable 400 are taut, thereby ensuring that the main gear sled 500 maintains balance during the retraction process.

A structure of the main gear sled 500 is shown in FIG. 2, which adopts a double-board structure with an opening. The body of the sled is composed of a box structure formed by riveting a plurality of aluminum alloy plates, and an opening for tires to move up and down is left in the middle. A rotatable tire rotating baffle is hinged at an upper end of a load-bearing box in the middle of the sled. One main load-bearing longitudinal beam is arranged on each of the left and right sides of the sled. The front torque tube 2 and the rear torque tube 7 are riveted on the longitudinal beams. The front portion of the sled carries relatively less load. Thus, reinforcing ribs in the front portion are distributed to reduce weight. A main load-bearing bracket is disposed at the tire rotating baffle in the upper middle portion of the sled. This bracket, as the main load-bearing structure, is riveted on the upward side plates on both sides of the sled. The lower portions of the side plates are riveted on the longitudinal beams and longitudinal long side plates on both sides. A plurality of reinforcing ribs are densely arranged in the box structure under the main load-bearing bracket, which are used to bear the instantaneous load generated and transmitted by the tire pressing on the rotating baffle when the aircraft lands. When the sled is retracted, all structures only bear the weight of the sled itself and the aerodynamic forces generated during flight. When the sled is extended, the various loads generated when the aircraft is landing will be transmitted from the tires to the rotating baffle and then from the rotating baffle to various parts of the sled.

A retraction/extension device is shown in FIG. 3, which consists of 12 components shown in the figure. The hydraulic actuator 1 is the power source for the movement of the sled during retraction and extension, and is hinged on an actuator support of the sled body. The front torque tube 2 is rotatably connected to the left and right longitudinal beams of the sled. The two rocker arms on the front torque tube 2 are hinged to the hydraulic actuator 1 and the rotating baffle linkages 3. One side of the rotating baffle linkages 3 is hinged to the rocker arms on the front torque tube 2, and the other side is hinged to an outer support of the rotating baffle 4. During movement, the rotating baffle linkages 3 pull the rotating baffle 4 to rotate around a shaft connecting the rotating baffle 4 and a bracket of the sled body. The rotating baffle 4 is a component that directly carries the landing load transmitted by the tire. Due to the relatively large load that the rotating baffle 4 is subjected to, reinforcing ribs are disposed on the side of the rotating baffle 4. The transmission rod assembly 5 consists of two rods hinged together. The other side of one of the rods is hinged to the right rocker arm of the front torque tube 2. The other side of the other rod is hinged to the rear torque tube rocker arm 8. The hinge point of the two rods are confined within the groove of the sliding slot 6 fixed to the sled body and can only slide along the heading direction within the groove. Like the front torque tube 2, the rear torque tube 7 is rotatably connected to the left and right longitudinal beams on the inner side of the sled. The rear torque tube rocker arm 8 and the left and right long rocker arms are fixed to the rear torque tube 7. One end of the left axle rocker arm 9 and one end of the right axle rocker arm 10 are hinged to the aircraft wheel axle. The other end of the left axle rocker arm 9 and the other end of the right axle rocker arm 10 are hinged to the left and right long rocker arms of the rear torque tube 7. The retractable steel cable pulley 11 is fixed to the sled body to fix the movement position of the retractable steel cable of the sled. The front cable joint 12 and the rear cable joint 13 are fixed to the sled and are used to connect the front cable and the rear cable of the sled.

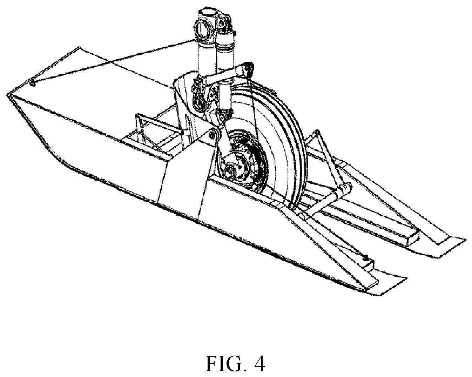

In order to ensure the stability and synchronization during retraction and extension, only one hydraulic actuator is provided inside the sled. When the sled moves from the extended state to the retracted state during the retraction actuation, the hydraulic actuator 1 pushes the left rocker arm of the front torque tube 2 to drive the front torque tube to rotate. The left and right rocker arms on the front torque tube 2 pull and drive the left and right rotating baffle linkages 3. The rotating baffle linkages 3 drive and pull the rotating baffle 4 to rotate upward with the connection point with the sled body as an axis. The rotating baffle 4, while rotating upward, drives the retractable steel cable connected at a rear portion of the rotating baffle 4 and pulls the rear steel cable to the position shown in FIG. 4 so as to pull up the rear portion of the sled, thereby pulling the retractable steel cable connected to the rotating baffle to pull the middle connecting position of the rear steel cable of the sled forward to the position shown in FIG. 4 to pull up the sled. On the other hand, while the front torque tube 2 pulls the rotating baffle to rotate upward, the right rocker arm of the front torque tube 2 synchronously pulls the transmission rod assembly 5 to move forward. The two rods of the transmission rod assembly 5 are hinged therebetween by a bolt. The bolt, when installed, allows the transmission rod assembly 5 to slide back and forth only in the sliding slot 6. During the sliding of the bolt, the rear rod of the transmission rod assembly is driven to move forward and pull the rear torque tube rocker arm 8 to rotate forward. At this time, the rear rod, which is hinged to the rear torque tube rocker arm 8, drives the rear torque tube 7 to rotate. The left and right long rocker arms of the rear torque tube 7 are hinged to the left axle rocker arm 9 and the right axle rocker arm 10. When the rear torque tube 7 is pulled by the transmission rod assembly 5 to rotate, the rear torque tube 7 also rotates upward with a hinge shaft connecting the rear torque tube 7 with the left axle rocker arm 9 and the right axle rocker arm 10 as an axis. Under the synchronous movement of the rear steel cable and the rear torque tube 7, the sled can be retracted smoothly. The sled is moved upward with the left axle rocker arm 9 and the right axle rocker arm 10 as fulcrums. The sled extension actuation process is opposite to the retraction process. The hydraulic actuator 1 pulls the left rocker arm of the front torque tube 2 to rotate back to restore to the initial position of the sled extended state. The front torque tube 2, during the restoring process, drives the rotating baffle linkages 3 to drive the rotating baffle 4 to rotate downward, and putting the rear steel cable pulled up by the retractable steel cable back to its initial position. On the other hand, the right rocker arm of the front torque tube 2 pushes the transmission rod assembly 5. The transmission rod assembly 5 returns to the sled extended position under the restriction of the sliding slot 6 and drives the rear torque tube rocker arm 8 to rotate backward so as to drive the rear torque tube 7 to rotate, such that the sled moves downward to the sled extended position with the left axle rocker arm 9 and the right axle rocker arm 10 as fulcrum. Thus, the actuation of the sled from the retracted position to the extended position is completed.

According to calculation, the center of gravity of the sled is in front of the wheel axle, and the acting points of the above two forces are behind the center of gravity. Therefore, a front steel cable needs to be installed at the front portion of the sled to ensure the posture of the sled, and the steel cable needs to be elastic to adapt to the length change in the process of retracting and extending the sled. By calculation, the upward retraction distance of the rear steel cable of the sled and the rotation angle of the rear torque tube can ensure that the sled angle remains unchanged when the sled is in the extended position and the retracted position.

The posture and the retraction and extension processes of the sled are completed by the above three parts, in which the rear steel cable and the retractable steel cable play a main role, and the retractable steel cable pulley 11 is used as a supporting point to pull the sled up. The connection point between the rear torque tube rocker arm and the axle rocker arms is the second supporting point of the sled to maintain the posture of the sled. The main function of the front steel cable in the retraction and extension processes and during use of the sled is to hold the front portion of the sled, ensure that the rear steel cable and the retractable steel cable of the sled are always in a taut state in the retracted and extended states, and prevent the sled from out-of-control abnormal deflection due to the center of gravity being in front of the two supporting points.

The sled landing gear according to one or more embodiments of the present application has the following functions:
1. The aircraft is enabled to take off, land, and park in soft snow and compacted snow sites.
   The shape and size of the sled should ensure that under certain climatic conditions, when the aircraft lands on a soft snow pavement or a compacted snow pavement with the maximum landing weight, it can obtain effective support and has appropriate resistance when taxiing, taking off, and landing.
2. After installing the sled, the tailstrike angle when taking off and landing on the hard pavement is not less than the original tailstrike angle.
3. It has the function of stabilizing the taxiing direction of the aircraft.
   The shape of the sled board should have the function of keeping the taxiing direction of the aircraft stable. At the same time, after the sled is installed, the landing gear of the aircraft no longer has the functions of front wheel steering and brake-differential steering. The sled device should be able to meet the functions of aircraft propeller differential and counter-propeller deceleration for steering.
4. The sled retraction/extension system has the function of position indication.
   Sensors should be provided in the retracted position and extended position of the sled, and displayed through the cockpit display panel.
5. It has the function of ground maintenance interface.
   After the sled is installed, the front landing gear should retain the existing traction interface or set up a new traction interface to meet the ground traction function.
6. It is suited to extremely cold operating environments.
   The materials, hydraulic accessories, hydraulic oil, sealing devices, electronic components, etc. used in the sled device should be able to withstand extremely cold operating environments.

## Claims

1. A sled landing gear, comprising:
a main landing gear (100);
a front steel cable (200);
a rear steel cable (300);
a retractable steel cable (400);
a main gear sled (500); and
a retraction/extension device, wherein
the main gear sled (500) is a double-board structure with an opening,
an end of the front steel cable (200) is connected to the main landing gear (100),
another end of the front steel cable (200) is connected to a front end of the main gear sled (500),
an end of the rear steel cable (300) is connected to the main landing gear (100),
another end of the rear steel cable (300) is connected to a rear end of the main gear sled (500),
an end of the retractable steel cable (400) is connected to a middle section of the rear steel cable (300),
another end of the retractable steel cable (400) is connected to the retraction/extension device,
the retraction/extension device controls retraction and extension of the sled via the retractable steel cable.

2. The sled landing gear according to claim 1, wherein
the retraction/extension device comprises a hydraulic actuator (1), a front torque tube (2), two rotating baffle linkages (3), a rotating baffle (4), a transmission rod assembly (5), a motion slot (6), a rear torque tube (7), a rear torque tube rocker arm (8), a left axle rocker arm (9), a right axle rocker arm (10), a retractable steel cable pulley (11), a front steel cable joint (12), and a rear steel cable joint (13),
the hydraulic actuator (1) is hinged on an actuator support fixed to the main gear sled (500),
two ends of the front torque tube (2) are rotatably connected to left and right longitudinal beams of the main gear sled (500),
a middle section of a left rocker arm of the front torque tube (2) is hinged to an actuating end of the hydraulic actuator (1),
an end portion of the left side rocker arm of the front torque tube (2) is hinged to an end of one of the rotating baffle linkages (3),
an end portion of a right rocker arm of the front torque tube (2) is hinged to an end of another one of the rotating baffle linkages (3),
the other ends of the two rotating baffle linkages (3) are hinged to two lateral sides of the rotating baffle (4), respectively,
the two lateral sides of the rotating baffle (4) are hinged to two lateral sides of the main gear sled (500),
the transmission rod assembly (5) comprises two rods hinged together,
the motion slot (6) is provided in a body of the sled,
a hinge point of the transmission rod assembly (5) is confined within the motion slot (6),
two ends of the transmission rod assembly (5) are hinged to a middle section of the right rocker arm of the front torque tube (2) and an end of the rocker arm of the rear torque tube (8), respectively,
another end of the rear torque tube rocker arm (8) is connected to a right end of the rear torque tube (7),
an end of the left axle rocker arm (9) and an end of the right axle rocker arm (10) are hinged to an aircraft wheel axle,
another end of the left axle rocker arm (9) and another end of the right axle rocker arm (10) are hinged to left and right long rocker arms of the rear torque tube (7),
the retractable steel cable pulley (11) is fixed to the main gear sled (500),
an end of the retractable steel cable is connected to a middle section of the rear steel cable,
the retractable steel cable is fixed to the rotating baffle (4), bypassing the retractable steel cable pulley (11), and
the front steel cable joint (12) and the rear steel cable joint (13) are respectively fixed at the front end and the rear end of the main gear sled (500).

3. The sled landing gear according to claim 2, wherein reinforcing ribs are provided on side surfaces of the rotating baffle (4).

4. The sled landing gear according to claim 3, wherein the motion slot (6) is a groove along the heading direction, and the hinge point of the transmission rod assembly (5) can only move in the heading direction.

5. The sled landing gear according to claim 4, wherein the two rods of the transmission rod assembly (5) are hinged by a bolt.

6. The sled landing gear according to claim 1, wherein the front steel cable (200) is an elastic steel cable.

7. A method of using a sled landing gear, wherein the method is performed by means of the sled landing gear of any one of claims 1-5, the method comprising:
a sled extension actuation including: controlling, by the retraction/extension device, the retractable steel cable (400) to extend such that the rear steel cable (300) is taut, the front steel cable (200) being used to maintain stability of the main gear sled (500); and
a sled retraction actuation including: controlling, by the retraction/extension device, the retractable steel cable (400) to retract so as to drive the middle section of the rear steel cable (300), such that the rear end of the main gear sled (500) is raised and stably retracted by the front steel cable (200).

8. The method according to claim 7, wherein
the sled retraction actuation comprises:
pushing, by the hydraulic actuator (1), the left rocker arm of the front torque tube (2) to drive the front torque tube (2) to rotate;
pulling, by the left and right rocker arms on the front torque tube (2), the left and right rotating baffle linkages (3);
pulling, by the rotating baffle linkages (3), the rotating baffle (4) to rotate upward with a connection point with a body of the sled as an axis, the rotating baffle (4), while rotating upward, driving the retractable steel cable (400) connected at a rear portion of the rotating baffle (4) to pull up a rear portion of the sled;
while the front torque tube (2) is pulling the rotating baffle linkages (3) to rotate upward, pulling, by the right rocker arm of the front torque tube (2), the transmission rod assembly (5) to move forward so as to pull the rear torque tube rocker arm (8) to rotate;
driving, by the rear torque tube rocker arm (8), the rear torque tube (7) to rotate upward with a hinge shaft connecting the rear torque tube (7) with the left axle rocker arm (9) and the right axle rocker arm (10) as an axis, to retract the sled smoothly, and
the sled extension actuation comprises:
pulling, by the hydraulic actuator (1), the left rocker arm of the front torque tube (2) to restore the front torque tube (2) to an initial position of a sled extension state;
during the restoring of the front torque tube (2), driving, by the front torque tube (2), the rotating baffle linkages (3) so as to drive the rotating baffle (4) to rotate downward, the rear steel cable (300) pulled up by the retractable steel cable (400) being gradually put back to its initial position;
pushing, by the right side rocker arm of the front torque tube (2), the transmission rod assembly (5) to return to the sled extended position under the restriction of the motion slot (6) and to push the rear torque tube rocker arm (8) to drive the rear torque tube (7) to rotate, such that the sled moves downward to the sled extended position with the left axle rocker arm (9) and the right axle rocker arm (10) as fulcrum, completing the actuation of the sled from the retracted position to the extended position.
